# FASCICULE DE BREVET EUROPEEN

(11) **EP 2 799 246 B1**
(45) Date de publication et mention de la délivrance du brevet: **28.06.2017**
(21) Numéro de dépôt: 14164876.6
(22) Date de dépôt: 16.04.2014
(51) Int. Cl.: B60B 27/00, F16D 65/12

(54) **Montage d un ensemble disque de frein / jante de roue de véhicule automobile sur un système d entraînement en rotation dudit ensemble**
Montage einer Bremsscheiben-/Radfelgen-Einheit für Kraftfahrzeuge in ein Drehantriebssystem dieser Einheit
Mounting of a motor-vehicle brake disc / wheel rim assembly on a system for rotating said assembly

(30) Priorité: 30.04.2013 FR 1354021
(43) Date de publication de la demande: 05.11.2014
(73) Titulaire: NTN-SNR Roulements, 74000 Annecy (FR)
(72) Inventeur: Motot, Jean-Noël, 74330 Sevrier (FR); Pourroy-Solari, Vincent, 74230 Thones (FR)
(74) Mandataire: Sayettat, Julien Christian

(56) Documents cités:
- DE-C1- 19 650 477
- FR-A1- 2 514 301
- JP-A- 2004 098 885
- US-A1- 2010 119 186

## Description

L'invention concerne un montage d'un ensemble disque de frein / jante de roue de véhicule automobile sur un système d'entraînement en rotation dudit ensemble, ledit système comprenant un palier à roulement et un bol de transmission d'un couple moteur de rotation. Le document US 2010 119 186 A1 divulgue une montage d'un ensemble disque de frein / jante de roue selon le préambule de la revendication 1. Le palier présente un organe tournant monté en rotation par rapport à un organe fixe par l'intermédiaire d'au moins une rangée de corps roulants. Un tel palier permet le montage en rotation d'un ensemble disque de frein / jante de roue de véhicule automobile qui, lorsque ladite roue est motrice, peut être entraîné en rotation par un bol de transmission qui est actionné en rotation par le moteur du véhicule, ledit bol comprenant notamment un joint homocinétique (CVJ) par exemple de type Rzeppa.

Pour permettre le montage de l'ensemble disque / jante, l'organe tournant peut comprendre un flasque équipé de moyens de fixation dudit ensemble. Pour ce faire, le disque et la jante doivent être centrés par rapport au flasque, notamment pour être fixés ensemble de façon concentrique.

La réalisation d'un tel centrage selon l'art antérieur nécessite d'équiper le disque et la jante de moyens géométriques complexes qui ont un impact négatif sur le poids du montage, ce qui est d'autant plus pénalisant qu'il s'agit d'éléments entraînés en rotation.

L'invention a pour but de résoudre les problèmes de l'art antérieur en proposant notamment un montage d'un ensemble disque de frein / jante de roue de véhicule automobile sur un système d'entraînement en rotation dudit ensemble, dans lequel le centrage dudit ensemble est réalisé de façon particulièrement simple et en limitant la contrainte de poids induite.

A cet effet, l'invention propose un montage d'un ensemble disque de frein / jante de roue de véhicule automobile sur un système d'entraînement en rotation dudit ensemble, ledit système comprenant un palier à roulement présentant un organe tournant monté en rotation par rapport à un organe fixe par l'intermédiaire d'au moins une rangée de corps roulants, ledit système comprenant un bol de transmission d'un couple moteur audit organe tournant, ledit organe tournant comprenant un flasque présentant une paroi radiale s'étendant entre deux bords axiaux respectivement intérieur et extérieur, le disque présentant un manchon qui est centré sur le bord axial extérieur, la jante présentant un tube qui est centré dans le bord axial intérieur, ladite paroi radiale présentant au moins un orifice qui est équipé d'un moyen de serrage axial de la jante et du disque sur ladite paroi radiale.

D'autres objets et avantages de l'invention apparaîtront dans la description qui suit, faite en référence aux figures annexées, dans lesquelles :
- la figure 1 est une représentation partielle en coupe longitudinale d'un montage d'un ensemble disque de frein / jante de roue de véhicule automobile sur un système d'entraînement en rotation dudit ensemble selon un mode de réalisation de l'invention, ledit système étant monté dans un pivot ;

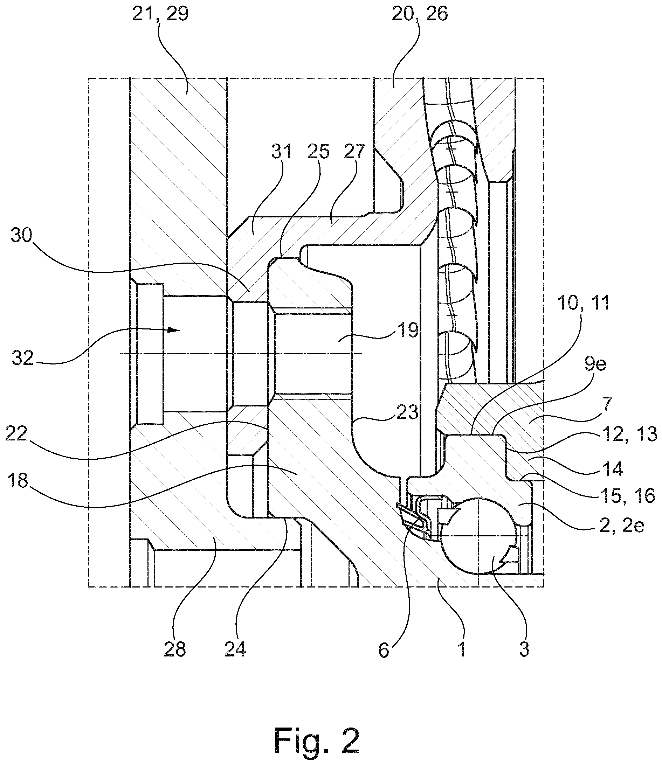

- la figure 2 est une représentation partielle agrandie d'une zone de la figure 1.

En relation avec ces figures, on décrit ci-dessous un système d'entraînement en rotation d'une roue de véhicule automobile comprenant un palier à roulement permettant le montage en rotation de ladite roue.

Pour ce faire, le palier présente un organe tournant 1 monté en rotation par rapport à un organe fixe 2 par l'intermédiaire d'au moins une rangée de corps roulants 3. Dans les modes de réalisation représentés, l'organe intérieur 1 est tournant et l'organe extérieur 2 est fixe, les termes « extérieur » et « intérieur » étant définis par rapport à l'axe R d'entrainement en rotation, respectivement pour une localisation éloignée et proche dudit axe.

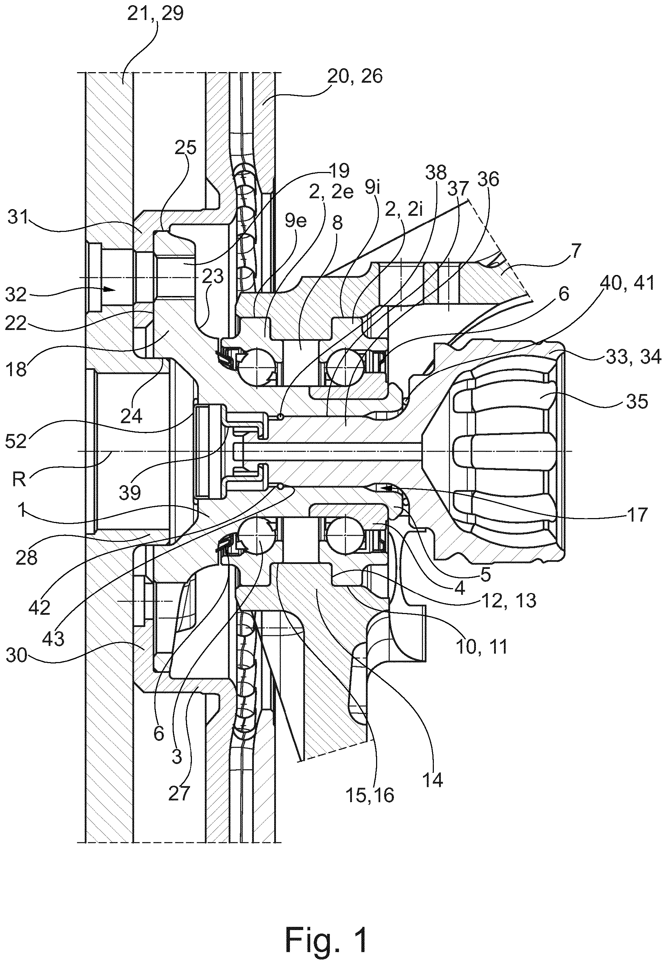

Le palier représenté comprend deux rangées de billes 3 qui sont espacées axialement, lesdites rangées étant chacune disposées entre deux pistes de roulement formées sur respectivement un organe 1, 2 pour guider la rotation de l'organe tournant 1. Dans la description, les termes « externe » et « interne » sont définis respectivement à gauche et à droite sur la figure 1, les termes « radial » et « axial » étant définis par rapport à l'axe R d'entrainement en rotation, respectivement perpendiculairement et suivant cet axe.

Plus précisément, l'organe tournant 1 comprend une bague intérieure 4 rapportée sur laquelle la piste de roulement interne est formée. Cette réalisation permet l'assemblage du palier en prévoyant, après l'introduction des billes 3 entre les organes 1, 2, la disposition de la bague 4 autour de l'organe tournant 1 et son immobilisation axiale vers l'arrière au moyen d'une collerette 5 qui peut être réalisée par sertissage.

Dans le mode de réalisation représenté, l'organe fixe 2 comprend deux bagues extérieures distinctes respectivement externe 2e et interne 2i dans lesquelles respectivement une piste de roulement est formée, un chemin de roulement étant réalisé entre les pistes internes et externes de chacun des organes 1, 2. En particulier, la bague intérieure 4 est immobilisée axialement en regard de la bague extérieure interne 2i. Par ailleurs, un élément d'étanchéité 6 est prévu entre les bagues extérieures 2 et l'organe intérieur 1 pour équiper le côté respectivement interne et externe de chacun des chemins de roulement.

En relation avec la figure 1, le système d'entraînement est monté dans un pivot 7 destiné à être associé à la structure du véhicule par l'intermédiaire d'un élément de suspension. Pour ce faire, le pivot 7 comprend un logement annulaire 8 dans lequel les bagues extérieures 2 formant l'organe fixe sont montées en étant espacées axialement dans respectivement une gorge 9 - respectivement interne 9i et externe 9e - qui est formée dans le logement 8.

Chacune des gorges 9 présente une portée axiale 10 sur laquelle une portée axiale extérieure 11 d'une bague 2 est serrée radialement. En particulier, cette réalisation permet un emmanchement axial des bagues extérieures 2 avec une précharge suffisante pour fiabiliser le montage du système d'entraînement dans le pivot 7.

Toutefois, dans le cas où le pivot 7 présente une dilatation thermique qui est supérieure à celle des bagues extérieures 2, une augmentation de la température induit une perte de serrage radial entre les portées axiales 10, 11. En particulier, cette différence de dilatation thermique est constatée lorsque le palier est réalisé à base d'acier, notamment d'acier à roulement de type 100Cr6, et le pivot 7 est réalisé en matériau léger tel que l'aluminium, le magnésium ou un matériau composite ou plastique pour limiter son impact sur le poids du montage.

Pour compenser cette perte de serrage radial, chaque gorge 9 présente une portée radiale 12 sur laquelle une portée radiale 13 d'une bague extérieure 2 est en appui axial afin qu'une augmentation de température induise une augmentation du serrage axial entre les portées radiales 12, 13. Ainsi, la fiabilité du montage des bagues extérieures 2 dans le logement 8 peut être garantie, notamment en conservant la précharge entre eux sur une plage de température étendue, et ce même en relation avec l'utilisation d'un pivot 7 en aluminium, en magnésium ou en matériau composite ou plastique.

Dans le mode de réalisation représenté, les gorges 9 sont réalisées dans le logement 8, par exemple par usinage, en formant un épaulement 14 séparant axialement lesdites gorges, les portées radiales 12 desdites gorges étant formées sur respectivement un côté dudit épaulement. En particulier, chacune des gorges 9 présente une géométrie annulaire continue qui débouche axialement d'un côté du logement 8 par l'intermédiaire de la portée axiale 10. Ainsi, il est possible d'emmancher axialement chacune des bagues 2 dans sa gorge 9, la fin de l'emmanchement étant définie par mise en appui axial des portées radiales 13 respectivement d'un côté de l'épaulement.

Dans le mode de réalisation représenté, les corps roulants 3 sont à contact oblique dans une configuration en O entre les pistes de roulement. En outre, chaque bague 2 présente une portée axiale intérieure 15 qui est montée sur une portée axiale 16 du logement 8.

Plus précisément, la portée radiale 13 de chaque bague 2 est bordée de part et d'autre par une portée axiale respectivement extérieure 11 et intérieure 15, chacune des portées axiales intérieures 15 étant montée glissante sur une portée axiale intérieure 16 de l'épaulement 14. En particulier, l'interférence radiale intérieure entre les portées axiales 15, 16 permet de limiter la possibilité de rotulation des bagues extérieures 2 dans leur gorge 9 en formant une zone de reprise d'effort.

L'organe tournant 1 présente un alésage 17 et comprend des moyens d'association de la roue qui, dans le mode de réalisation représenté, comprennent un flasque 18 présentant au moins un orifice 19 qui est équipé d'un moyen de serrage, notamment par vissage.

En relation avec la figure 1, un ensemble disque de frein 20 / jante de roue 21 de véhicule automobile peut être monté sur le système d'entraînement. Pour ce faire, au moins un orifice 19 est formé sur une paroi radiale 22 du flasque 18, ledit orifice étant équipé d'un moyen de serrage axial de la jante 21 et du disque 20 sur ladite paroi radiale.

Le flasque 18 s'étend autour de l'alésage 17 en étant disposé extérieurement par rapport aux chemins de roulement et en regard du côté externe du pivot 7. Le flasque 18 présente une couronne s'étendant axialement entre deux parois radiales respectivement externe 22 et interne 23, ladite paroi externe s'étendant entre deux bords axiaux respectivement intérieur 24 et extérieur 25. Par ailleurs, une pluralité d'orifices 19 de serrage est répartie angulairement au travers de la couronne en débouchant dans chacune de ses parois radiales 22, 23.

Le disque 20 présente une couronne 26 de freinage qui s'étend autour d'un manchon annulaire 27, ledit manchon étant centré sur le bord axial extérieur 25. En outre, la jante 21 présente un tube 28 qui est centré dans le bord axial intérieur 24. Ainsi, avec des moyens géométriques particulièrement simples, on peut réaliser le centrage de l'ensemble disque de frein 20 / jante de roue 21 sur l'organe tournant 1, et ce sans impacter négativement le poids du montage. En particulier, le centrage est réalisé par simple emmanchement du manchon 27 autour du flasque 18 et du tube 28 dans ledit flasque, puis serrage axial de l'ensemble sur ledit flasque.

Dans le mode de réalisation représenté, la jante 21 présente une couronne extérieure radiale 29 dont la paroi interne est serrée axialement sur la paroi radiale 22 du flasque 18, ladite couronne extérieure s'étendant autour du tube 28. Plus précisément, la couronne extérieure 29 présente un alésage dans lequel le tube 28 est formé en s'étendant axialement du côté interne, le diamètre extérieur dudit tube étant sensiblement égal au diamètre du bord intérieur 24. Le tube 28 peut être formé d'une seule pièce avec la couronne extérieure 29, par exemple par usinage, moulage ou emboutissage. En variante, le tube 28 peut être rapporté dans l'alésage de la couronne extérieure 29, par exemple en étant fretté dans ledit alésage.

Par ailleurs le disque 20 présente une couronne intérieure radiale 30 dont la paroi interne est serrée axialement sur la paroi radiale 22 du flasque 18, ladite couronne intérieure s'étendant à l'intérieur du manchon 27. Plus précisément, le manchon 27 présente un bord externe libre qui est équipé de la couronne intérieure 30, ladite couronne étant reliée au manchon 27 par un épaulement 31 dans lequel le bord extérieur 25 est centré. En particulier, le diamètre intérieur de l'épaulement 31 est sensiblement égal au diamètre du bord extérieur 25.

De façon avantageuse, la couronne intérieure 30 est interposée entre la couronne extérieure 29 et la paroi radiale 22 du flasque 18, la paroi interne de la couronne extérieure 29 étant serrée axialement sur la paroi externe de la couronne intérieure 30 dont la paroi interne est serrée axialement sur la paroi radiale 22. En outre, les couronnes 29, 30 présentent chacune au moins un orifice 32, lesdits orifices étant alignés avec ceux de la paroi radiale 22 pour être équipés du moyen de serrage axial.

Dans le cas du montage d'une roue motrice, l'entraînement en rotation de ladite roue peut être réalisé par un bol 33 de transmission d'un couple moteur à l'organe tournant 1, ledit bol étant actionné en rotation par le moteur du véhicule et comprenant notamment un joint homocinétique (CVJ) par exemple de type Rzeppa.

Sur les figures, seule la coquille extérieure 34 du joint est représentée, ladite coquille étant de façon connue destinée à recevoir une noix par l'intermédiaire de corps roulants qui sont disposés dans des gorges 35 pour permettre une variation de l'angle entre les axes de ladite coquille et de ladite noix.

Pour assurer la transmission du couple de rotation entre le bol 33 et l'organe tournant 1, le système d'entraînement comprend des moyens d'engrenage qui sont formés respectivement dans l'alésage 17 de l'organe tournant 1 et sur un embout 36 du bol 33. En particulier, l'embout 36 et l'alésage 17 présentent une géométrie cylindrique complémentaire, ledit embout s'étendant axialement en une seule pièce sur le côté externe de la coquille 34.

Dans le mode de réalisation représenté, les moyens d'engrenage comprennent deux ensembles de cannelures axiales 37, chaque ensemble étant formé respectivement dans l'alésage 17 et sur l'embout 36 pour être engagés l'un dans l'autre lorsque ledit embout est monté dans ledit alésage. En particulier, l'embout 36 est monté dans l'alésage 17 dans une position d'engrenage dans laquelle les cannelures 37 sont aptes à assurer la transmission du couple de rotation entre le bol 33 de transmission et l'organe tournant 1.

Le système d'entraînement comprend en outre un dispositif de maintien axial de l'embout 36 dans l'alésage 17 en position d'engrenage, ledit dispositif de maintien axial comprenant :
- un élément de butée 38 qui est interposé entre l'embout 36 et l'alésage 17 en définissant la position axiale d'engrenage entre eux ; et
- une douille 39 de retenue de l'embout 36 dans ladite position d'engrenage, ladite douille présentant des moyens d'accrochage sur l'embout 36 et des moyens de butée axiale sur l'organe tournant 1.

Ainsi, après disposition de l'embout 36 dans l'ouverture interne de l'alésage 17 et coulissement dudit embout jusqu'à une position d'engrenage définie par l'élément de butée 38, ladite position d'engrenage peut être maintenue de façon particulièrement simple au moyen de la douille 39 qui, au lieu de serrer l'embout 36 autour de l'alésage 17 à l'opposé d'elle, le retient sur une butée axiale formée à l'interface entre ledit alésage et ledit embout.

Dans le mode de réalisation représenté, l'alésage 17 est entouré par une collerette radiale interne, notamment formée par la collerette 5 de sertissage, ladite collerette étant disposée en regard d'une paroi radiale 40 du bol 33 qui entoure l'embout 36. De façon avantageuse, l'élément de butée 38 est disposé pour éviter la mise en appui axial de la paroi radiale 40 sur la collerette 5, notamment en prévoyant que le coulissement de l'embout 36 dans l'alésage 17 soit bloqué avant ladite mise en appui afin que la position d'engrenage ne soit pas définie par plaquage du bol 33 sur la collerette 5.

En outre, un joint d'étanchéité 41 peut être interposé entre la collerette 5 et la paroi radiale 40 pour étanchéifier les moyens d'engrenage 37, notamment en empêchant l'entrée de polluant à l'interface entre l'alésage 17 et l'embout 36. L'élément de butée 38 peut être disposé pour éviter un écrasement du joint 41 tout en conférant une interférence suffisante pour qu'il remplisse sa fonction, et ce sans risquer de bruit ou d'usure par frottement entre la paroi radiale 40 et la collerette 5.

Dans le mode de réalisation représenté, l'embout 36 et l'alésage 17 présentent chacun un portée d'appui respectivement extérieure 42 et intérieure 43, l'élément de butée 38 en position d'engrenage étant maintenu axialement de part et d'autre entre lesdites portées. En particulier, en position d'engrenage, chaque portée 42, 43 peut être en appui respectivement sur un côté de l'élément de butée 38 pour éviter l'apparition d'un jeu axial entre l'embout 36 et l'alésage 17.

L'élément de butée 38 est agencé pour empêcher un coulissement vers le côté externe de l'embout 36 au-delà de la position d'engrenage. Pour ce faire, chaque portée d'appui 43, 42 est saillante radialement respectivement intérieurement depuis l'alésage 17 et extérieurement à la périphérie de l'embout 36 afin de former un jeu annulaire réduit à l'interface entre ledit embout et ledit alésage. Le jeu est suffisant pour permettre le coulissement de l'embout 36, l'élément de butée 38 présentant une épaisseur suffisante pour combler ledit jeu afin d'empêcher ledit coulissement par interférence au niveau des portées d'appui 42, 43.

L'élément de butée 38 est formé d'un segment d'arrêt torique qui présente une géométrie annulaire interrompue. Ainsi, le segment 38 peut être monté dans l'alésage 17 au travers de son ouverture externe, pour être disposé sur la portée d'appui 43 par diminution réversible de son diamètre, puis l'embout 36 est poussé en coulissement dans l'alésage 17 jusqu'à mis en contact de sa portée d'appui 42 sur ledit segment.

Par ailleurs, les portées d'appui 42, 43 sont formées dans le prolongement externe des moyens d'engrenage 37. Ainsi, la mise en butée axiale de l'embout 36 est réalisée sur le côté externe, c'est-à-dire au plus près de la douille 39, afin de limiter les efforts nécessaires au maintien de la position d'engrenage.

En outre, la douille 39 présente un alésage et l'organe tournant 1 est équipé d'un bouchon 52 pour empêcher l'entrée de polluant dans l'alésage 17. En particulier, le bouchon 52 est emmanché autour de l'ouverture externe de l'alésage 17.

## Revendications

1. Montage d'un ensemble disque de frein (20) / jante de roue (21) de véhicule automobile sur un système d'entraînement en rotation dudit ensemble, ledit système comprenant un palier à roulement présentant un organe tournant (1) monté en rotation par rapport à un organe fixe (2) par l'intermédiaire d'au moins une rangée de corps roulants (3), ledit système comprenant un bol (33) de transmission d'un couple moteur audit organe tournant, ledit organe tournant comprenant un flasque (18) présentant une paroi radiale (22) s'étendant entre deux bords axiaux respectivement intérieur (24) et extérieur le disque (20) présentant un manchon (27) qui est centré sur le bord axial extérieur (25), la jante (21) présentant un tube (28), ladite paroi radiale présentant au moins un orifice (19) qui est équipé d'un moyen de serrage axial de la jante (21) et du disque (20) sur ladite paroi radiale, ledit montage étant **caractérisé en ce que** le tube (28) est centré dans le bord axial intérieur (24) de la flasque (18).

2. Montage selon la revendication 1, **caractérisé en ce que** la jante (21) présente une couronne extérieure radiale (29) qui est serrée axialement sur la paroi radiale (22) du flasque (18), ladite couronne extérieure s'étendant autour du tube (28).

3. Montage selon l'une des revendications 1 ou 2, **caractérisé en ce que** le disque (20) présente une couronne intérieure radiale (30) qui est serrée axialement sur la paroi radiale (22) du flasque (18), ladite couronne intérieure s'étendant à l'intérieur du manchon (27).

4. Montage selon les revendications 2 et 3, **caractérisé en ce que** la couronne intérieure (30) est interposée entre la couronne extérieure (29) et la paroi radiale (22) du flasque (18).

5. Montage selon la revendication 4, **caractérisé en ce que** les couronnes (29, 30) présentent chacune au moins un orifice (32), lesdits orifices étant alignés avec ceux de la paroi radiale (22) pour être équipés du moyen de serrage axial.

6. Montage selon l'une quelconque des revendications 3 à 5, **caractérisé en ce que** le manchon (27) présente un bord libre qui est équipé de la couronne intérieure (30), ladite couronne étant reliée au manchon (27) par un épaulement (31) dans lequel le bord extérieur (25) est centré.

7. Montage selon l'une quelconque des revendications 1 à 6, **caractérisé en ce que** des moyens d'engrenage (37) sont formés respectivement dans un alésage (17) de l'organe tournant (1) et sur un embout (36) du bol (33), ledit embout étant monté dans ledit alésage et ledit système comprenant un dispositif de maintien axial de l'embout (36) dans l'alésage (17) dans une position d'engrenage dans laquelle lesdits moyens sont aptes à assurer la transmission du couple de rotation entre ledit bol de transmission et ledit organe tournant.

8. Montage selon la revendication 7, **caractérisé en ce que** le dispositif de maintien axial comprend un élément de butée (38) qui est interposé entre l'embout (36) et l'alésage (17) en définissant la position axiale d'engrenage entre eux, ledit dispositif comprenant en outre une douille (39) de retenue de l'embout (36) dans ladite position d'engrenage, ladite douille présentant des moyens d'accrochage sur l'embout (36) et des moyens de butée axiale sur l'organe tournant (1).

## Patentansprüche

1. Montage einer Einheit aus Bremsscheibe (20) / Radfelge (21) für Kraftfahrzeuge in ein Drehantriebssystem der besagten Einheit, wobei das besagte System ein Wälzlager umfasst, das ein Drehorgan (1) aufweist, das unter Verwendung von zumindest einer Reihe von Rollkörpern (3) im Verhältnis zu einem feststehenden Organ (2) drehend montiert ist, wobei das besagte System eine Schale (33) zum Übertragen eines Motordrehmoments auf das besagte Drehorgan umfasst, wobei das besagte Drehorgan einen Flansch (18) umfasst, der eine radiale Wand (22) aufweist, die sich zwischen zwei jeweils inneren (24) und äußeren axialen Rändern erstreckt, wobei die Scheibe (20) eine Muffe (27) aufweist, die auf dem äußeren axialen Rand (25) zentriert ist, die Felge (21) ein Rohr (28) aufweist, wobei die besagte radiale Wand zumindest ein Loch (19) aufweist, das mit einem Mittel zum axialen Spannen der Felge (21) und der Scheibe (20) auf der besagten radialen Wand versehen ist, wobei die besagte Montage **dadurch gekennzeichnet ist, dass** das Rohr (28) im inneren axialen Rand (24) des Flansches (18) zentriert ist.

2. Montage nach Anspruch 1, **dadurch gekennzeichnet, dass** die Felge (21) einen radialen äußeren Kranz (29) aufweist, der axial an der radialen Wand (22) des Flansches (18) gespannt ist, wobei sich der besagte äußere Kranz um das Rohr (28) herum erstreckt.

3. Montage nach einem der Ansprüche 1 oder 2, **dadurch gekennzeichnet, dass** die Scheibe (20) einen radialen inneren Kranz (30) aufweist, der axial an der radialen Wand (22) des Flansches (18) gespannt ist, wobei sich der besagte innere Kranz im Inneren der Muffe (27) erstreckt.

4. Montage nach den Ansprüchen 2 und 3, **dadurch gekennzeichnet, dass** der innere Kranz (30) zwischen dem äußeren Kranz (29) und der radialen Wand (22) des Flansches (18) eingesetzt ist.

5. Montage nach Anspruch 4, **dadurch gekennzeichnet, dass** die Kränze (29, 30) jeweils zumindest ein Loch (32) aufweisen, wobei die besagten Löcher mit jenen der radialen Wand (22) fluchten, um mit dem axialen Spannmittel versehen zu werden.

6. Montage nach einem der Ansprüche 3 bis 5, **dadurch gekennzeichnet, dass** die Muffe (27) einen freien Rand aufweist, der mit dem inneren Kranz (30) versehen ist, wobei der besagte Kranz durch einen Ansatz (31) mit der Muffe (27) verbunden ist, in dem der äußere Rand (25) zentriert ist.

7. Montage nach einem der Ansprüche 1 bis 6, **dadurch gekennzeichnet, dass** Eingriffsmittel (37) jeweils in einer Bohrung (17) des Drehorgans (1) und an einem Endstück (36) der Schale (33) gebildet werden, wobei das besagte Endstück in der besagten Bohrung montiert ist, und das besagte System eine Vorrichtung zum axialen Festhalten des Endstücks (36) in der Bohrung (17) in einer Eingriffsposition umfasst, in der die besagten Mittel imstande sind, für die Übertragung des Drehmoments zwischen der besagten Schale zum Übertragen und dem besagten Drehorgan zu sorgen.

8. Montage nach Anspruch 7, **dadurch gekennzeichnet, dass** die Vorrichtung zum axialen Festhalten ein Anschlagelement (38) umfasst, das zwischen dem Endstück (36) und der Bohrung (17) eingesetzt ist, und die axiale Eingriffsposition zwischen ihnen definiert, wobei die besagte Vorrichtung darüber hinaus eine Buchse (39) zum Zurückhalten des Endstücks (36) in der besagten Eingriffsposition umfasst, wobei die besagte Buchse Mittel zum Befestigen am Endstück (36) und axiale Anschlagmittel am Drehorgan (1) aufweist.

## Claims

1. Assembly of a motor vehicle brake disc (20) /wheel rim (21) set on a rotating drive system of said set, said system comprising a roller bearing unit presenting a turning body (1) assembled rotating in relation to a fixed body (2) through the intermediary of at least one row of rolling bodies (3), said system comprising a transmission bowl (33) of an engine torque to said turning body, said turning body comprising a flange (18) presenting a radial wall (22) extending between two respectively interior (24) and exterior axial edges, the disc (20) presenting a sleeve (27) which is centred on the exterior axial edge (25), the rim (21) presenting a tube (28), said radial wall presenting at least one orifice (19) which is equipped with an axial tightening means of the rim (21) and of the disc (20) on said radial wall, said assembly being **characterised in that** the tube (28) is centred in the interior axial wall (24) of the flange (18) .

2. Assembly according to claim 1, **characterised in that** the rim (21) presents an exterior radial crown (29) which is tightened axially on the radial wall (22) of the flange (18), said exterior crown extending around the tube (28).

3. Assembly according to one of the claims 1 or 2, **characterised in that** the disc (20) presents an interior radial crown (30) which is tightened axially on the radial wall (22) of the flange (18), said interior crown extending to the interior of the sleeve (27).

4. Assembly according to claims 2 and 3, **characterised in that** the interior crown (30) is interposed between the exterior crown (29) and the radial wall (22) of the flange (18) .

5. Assembly according to claim 4, **characterised in that** the crowns (29, 30) each present at least one orifice (32), said orifices being aligned with those of the radial wall (22) to be equipped with the axial tightening means.

6. Assembly according to any one of the claims 3 to 5, **characterised in that** the sleeve (27) presents a free edge which is equipped with the interior crown (30), said crown being connected to the sleeve (27) by a shoulder (31) wherein the exterior edge (25) is centred.

7. Assembly according to any one of the claims 1 to 6, **characterised in that** the gear means (37) are formed respectively in a bore (17) of the turning body (1) and on a nozzle (36) of the bowl (33), said nozzle being assembled in said bore and said system comprising an axial maintenance device of the nozzle (36) in the bore (17) in a gear position wherein said means are able to ensure the transmission of the rotating torque between said transmission bowl and said turning body.

8. Assembly according to claim 7, **characterised in that** the axial maintenance device comprises a stopper element (38) which is interposed between the nozzle (36) and the bore (17) by defining the axial gear position between them, said device additionally comprising a holding socket (39) of the nozzle (36) in said gear position, said socket presenting fastening means on the nozzle (36) and axial stopper means on the turning body (1).
